Europäisches Patentamt

European Patent Office

Office européen des brevets

(11) Publication number: **0 095 274**
**B1**

(12) **EUROPEAN PATENT SPECIFICATION**

(45) Date of publication of patent specification: **02.07.86**

(21) Application number: **83302595.0**

(22) Date of filing: **09.05.83**

(51) Int. Cl.⁴: **C 08 L 25/12, C 08 L 33/00**

(54) **Polymer blends and composition comprising them.**

(30) Priority: **10.05.82 US 376479**

(43) Date of publication of application:
**30.11.83 Bulletin 83/48**

(45) Publication of the grant of the patent:
**02.07.86 Bulletin 86/27**

(84) Designated Contracting States:
**AT BE CH DE FR GB IT LI LU NL SE**

(56) References cited:
**EP-A-0 013 485**
**EP-A-0 018 640**
**EP-A-0 035 341**

(73) Proprietor: **Rohm and Haas Company**
**Independence Mall West**
**Philadelphia, Pennsylvania 19105 (US)**

(72) Inventor: **Staas, William Henry**
**88 N. Kitty Knight Drive**
**Churchville Pennsylvania 18966 (US)**

(74) Representative: **Angell, David Whilton et al**
**Rohm and Haas Company Patent Department**
**Chesterfield House Bloomsbury Way**
**London WC1A 2TP (GB)**

The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 095 274

**Description**

This invention concerns polymer blends and compositions comprising the blends. The technical field to which the invention relates is the attainment of desirable physical properties such as improved impact strength in plastics materials. More specifically the invention concerns polymer-polymer blends in which the components are either mutually soluble or partly soluble.

A new class of polymers, hereafter referred to as "polyglutarimides", having useful properties are disclosed in Kopchik U.S. Patent 4,246,374. Various possible modifications of the polyglutarimides are disclosed in this patent and in Mueller U.S. Patent 4,254,232 and Weese et al U.S. Patent 4,217,424.

Styrene-acrylonitrile ("SAN") copolymers are known to be useful in certain polymer applications.

Various attempts have been made to improve the impact strength and other properties of the polyglutarimide family of polymers and also to improve various properties or property balances of styrene-acrylonitrile copolymers.

Because of unfavourable thermodynamics (entropy of mixing) polymer-polymer solutions are rare. Various theoreticians have attempted to predict polymer-polymer miscibility via complex cohesive energy density calculations or the use of Group Molar Attraction Tables, but there is no good correlation between theory and actual practice via experiments.

An object of the present invention is to provide polymer blends having more attractive properties than the individual components.

A further object is to provide improved polyglutarimide(s). The invention also seeks to provide a method of incorporating various polymers and optionally other additives in polyglutarimide polymers.

According to this invention there is provided a blend of (A) 1 to 99 parts by weight of polyglutarimide and (B) 99 to 1 parts by weight of single stage polymer comprising substantially units of (i) styrene and/or substituted styrene(s) and (ii) acrylonitrile and/or methacrylonitrile, wherein components (A) and (B) are mutually soluble or partly soluble.

Since the single stage polymer comprises substantially units (i) and (ii) there may of course also be present such small amounts of other unspecified monomer(s), for example up to 10% by weight or less than 5% or even less than 3% by weight, which will not prevent mutual solubility or partial solubility of components (A) and (B).

However, in one preferred embodiment of the invention the single stage polymer consists of units (i) and (ii). Preferably the substituted styrene(s) is (are) one or more lower alkyl- and/or halo-substituted styrene(s). Component (i) may be styrene alone and component (ii) may be acrylonitrile alone.

When the blend is soluble, it has a single Tg as measured by differential scanning calorimetry (DSC) which falls between the individual Tg's of the single stage polymer and the polyglutarimide polymer, and the blend may be optically clear over a wide range of temperatures, for example from −40°C to 100°C.

The blends of this invention may also include conventional additives, for example one or more of the following impact modifier, rubber, additional polymer, filler, reinforcement, stabilizer, colorant, pigment and lubricant. When any such additive is included, the blend may not necessarily be transparent. The polyglutarimide is present in the blend in amounts of 1 to 99 parts by weight and can be any of the polyglutarimides described in the prior art. One preferred class of polyglutarimides is disclosed in Kopchik U.S. Patent 4,246,374. Modified polyglutarimides as described in Mueller U.S. Patent 4,254,232 and Weese et al. U.S. Patent 4,217,424 are also preferred. An especially preferred polyglutarimide comprises N-methyl glutarimide units. Another preferred polyglutarimide is the product of urea or ammonia or methylamine imidization of methyl methacrylate polymer or methyl methacrylate-styrene copolymer, which reaction may be performed in an extruder.

The single stage polymer may be styrene-acrylonitrile copolymer comprising acrylonitrile units in a minimum ratio (with styrene) of 1:10 by weight (AN:S).

For example suitable styrene-acrylonitrile copolymers may contain styrene and acrylonitrile units in weight ratios of 10:1 to 1:1 (S:AN).

The polymer blends of this invention may be conveniently prepared by conventional melt or solvent blending techniques.

A great deal of effort has gone into developing methods to predict polymer-polymer miscibility via complex cohesive energy density calculations involving the use of the Group Molar Attraction Tables, but the calculations are approximate at best. The Group Molar Attraction constants for the imide moiety have never been reported in the literature. Therefore, due to the unpredictability of theoretical calculations and the fact that such polymer solutions are rare, it is truly surprising that (A) and (B) polymer systems exhibit mutual solubility. This solubility phenomenon can provide polymers with enhanced property balances such as heat distortion temperature, tensile strength, tensile modulus, optical quality rheological behaviour, and impact strength.

When (A) and (B) are mutually soluble a single Tg as measured by DSC is observed in the region numerically between the bounds imposed by the Tg of the single stage polymer (B), for example a SAN polymer, and the Tg; of the polyglutarimide (A). Partial solubility exists when two Tg's are present and the initial Tg of either or both of the components (A) and (B) is moved significantly towards the other component's Tg.

Movement beyond the experimental error associated with the measurement and sample to sample

2

variation is regarded as significant. A shift of 3°C or more in a blend of e.g. 50 parts (A) and 50 parts (B) is significant and indicative of molecular interaction and hence partial solubility.

Low amounts of (A) or (B) in the blends may confuse this definition since movement would be very slight with small amounts of component, and so optical appearance, i.e. clarity, as well as the performance of other more definitive blends, i.e. higher in the junior ingredient, will serve as alternative tests of solubility. The occurrence of a refractive index match at the temperature at which appearance is assessed may give a false "clear" rating of a blend. A check for clarity due to solubility is to assess clarity vs. temperature, and if the blend is clear over a wide range of temperatures, it is soluble. Insolubility is defined as those blends (mixtures) having two separate Tg's undisturbed from the individual Tg values of the unblended components and such insoluble blends can be typically opaque depending on the concentration of ingredients.

In order that the invention may be further illustrated, the following embodiments are presented purely by way of example.

Examples
Examples 1 to 21

A series of blends of an SAN copolymer (Tyril 867)[a] and a variety of N-methyl glutarimide polymers prepared via the teachings of U.S. 4,246,374 were melt blended in a (1") 2.54 cm Killion single screw extruder at (480—510°F) 249—266°C barrel/die temperature and 73 rpm screw speed. Optical quality and DSC behavior of the blends are presented in Tables I and II.

By our definitions of solubility and partial solubility and insolubility (see page 6) 131° Vicat[b] and 140°C Vicat imides are soluble with Tyril 867; 150°C Vicat imide is partially soluble and 159, 170 and 178° Vicat imides are insoluble.

[a] 75 styrene: 25 acrylonitrile
[b] a measure of polymer softening point ASTM DI 525-70.

| Methylimide | % Imide |
|---|---|
| 131° Vicat | 7 |
| 140° | 50 |
| 150° | 70 |
| 159° | 76 |
| 170° | 85 |
| 178° | 88 |

# 0 095 274

TABLE I

SAN (Tyril 867)/Poly(N-methyl glutarimide) blends displaying single Tg behavior

| Example No. | Imide type* | Blend Imide/SAN | Tg | Appearance[c] |
|---|---|---|---|---|
| 1. | — | 0/100 | 110°C | Clear |
| 2. | 131° Vicat | 5/95 | 112°C | Clear |
| 3. | 131° Vicat | 50/50 | 122°C | Clear |
| 4. | 131° Vicat | 95/5 | 126°C | Clear |
| 5. | 131° Vicat | 100/0 | 130°C | Clear |
| 1. | — | 0/100 | 110°C | Clear |
| 6. | 140° Vicat | 5/95 | 110°C | Clear |
| 7. | " | 50/50 | 120°C | Clear |
| 8. | " | 95/5 | 132°C | Clear |
| 9. | " | 100/0 | 140°C | Clear |

[c] Clear=unclouded, glass-like
  Transparent=hazy but able to transmit colour and an image
  Translucent=transmitting rays of light, but not so as to render visible colour or form of objects beyond.
* high molecular weight (approx. 170,000 to 180,000 Mw) methyl imide resins.

4

TABLE II

SAN (Tyril 867)/Poly (N-methyl glutarimide) blends displaying double Tg behaviour

| Example No. | Imide type* | Blend Imide/SAN | Tg | Appearance |
|---|---|---|---|---|
| 1. | — | 0/100 | 110°C | Clear |
| 10. | 150°C Vicat | 5/95 | 113°C | Transparent |
| 11. | " | 50/50 | 121, 142°C | Opaque |
| 12. | " | 95/5 | 146°C | Clear |
| 13. | " | 100/0 | 149°C | Clear |
| 1. | — | 0/100 | 110°C | Clear |
| 14. | 159°C Vicat | 5/95 | 112°C | Translucent |
| 15. | " | 50/50 | 112, 156°C | Opaque |
| 16. | " | 95/5 | 112, 157°C | Hazy-clear |
| 17. | " | 100/0 | 157°C | Clear |
| 1. | — | 0/100 | 110°C | Clear |
| 18. | 171°C Vicat | 50/50 | 112, 169°C | Opaque |
| 19. | " | 100/0 | 169°C | Clear |
| 1. | — | 0/100 | 110°C | Clear |
| 20. | 178°C Vicat | 50/50 | 113, 175°C | Opaque |
| 21. | " | 100/0 | 175°C | Clear |

* as Table I.

Examples 22 to 34

Blends of ABS (Abson 89140)* and the series of imide polymers disclosed in Examples 1 to 21 were prepared by melt blending in a 2.54 cm (1″) Killion single screw extruder under the following conditions:

| | Blend composition (ABS/imide) | | | | | |
|---|---|---|---|---|---|---|
| | 95/5 | | 50/50 | | 5/95 | |
| | °C | (°F) | °C | (°F) | °C | (°F) |
| Barrel temperature | | | | | | |
| Zone 1 | 227 | (440) | 249 | (480) | 260 | (500) |
| Zone 2 | 227 | (440) | 249 | (480) | 260 | (500) |
| Zone 3 | 227 | (440) | 249 | (480) | 260 | (500) |
| Die temperature | 227 | (440) | 249 | (480) | 260 | (500) |
| Screw speed | | | 69 rpm | | | |

Samples are listed in Table III. Single Tg behaviour in the glassy phase (the rubber Tg remains) is observed for all samples listed. Optical appearance is complicated by the presence of insoluble (distinct Tg) rubber.

* The Abson compounds are mixtures of SAN copolymer and ABS rubber.

### TABLE III
### ABS (Abson 89140)/Poly (N-methyl glutarimide) blends

| Example No. | Imide type | Blend Imide/ABS | Thermal behaviour DTUFL* 1.82 MPa (264 psi) | Tg | Appearance |
|---|---|---|---|---|---|
| 22 | — | 0/100 | 85°C | 110°C | Opaque (refractive index mismatch with rubber) |
| 23 | 131°C Vicat | 5/95 | 86°C | 112°C | Opaque |
| 24 | " | 50/50 | 95°C | 121°C | Opaque |
| 25 | " | 95/5 | 101°C | 126°C | Translucent |
| 26 | " | 100/0 | 105°C | 130°C | Clear |
| 22 | — | 0/100 | 85°C | 110°C | Opaque |
| 27 | 140°C Vicat | 5/95 | 87°C | 111°C | Opaque |
| 28 | " | 50/50 | 105°C | 124°C | Translucent |
| 29 | " | 95/5 | 118°C | 138°C | Transparent |
| 30 | " | 100/0 | 116°C | 139°C | Clear |
| 22 | — | 0/100 | 85°C | 110°C | Opaque |
| 31 | 150°C Vicat | 5/95 | 85°C | 112°C | Opaque |
| 32 | " | 50/50 | 105°C | 130°C | Translucent |
| 33 | " | 95/5 | 127°C | 148°C | Hazy-clear |
| 34 | " | 100/0 | 129°C | 149°C | Clear |

Examples 22, 26 and 34 are controls.

* Deflection temperature under flexural load ASTM 648.

Example 35

Electric mill roll blends (10 phr and 30 phr)[d] of Tyril 867 and a proton substituted-polyglutarimide derived from urea (or ammonia) imidization of 55 MAA/45 styrene feedstock gave transparent, single Tg products. The samples remained clear when heated to 66°C (150°F) in a vacuum oven.

Examples 36—47

Melt blends of rubber containing SAN polymer systems and poly(N-methyl glutarimide) resins were prepared and examined for impact resistance. Results of these studies are presented in Table IV. For comparison, non-soluble pMMA outer shell impact modifiers are included in the table.

[d] phr=parts per hundred.

TABLE IV

Impact resistance of blends of poly(N-methyl glutarimide) resins and rubber-containing SAN compositions

### ABS-Type compositions

| Example No. | SAN-Based mat'l | Imide type | Blend ratio imide/SAN based mat'l | Notched Izod value-Newtons (ft-lbs/in. notch) |
|---|---|---|---|---|
| 36 (control) | ABS (Abson 89140) | — | 0/100 | $24.03 \times 10^{-3}$ (4.5) |
| 37 | " | 131°C Vicat | 5/95 | $20.82 \times 10^{-3}$ (3.9) |
| 38 | " | 140°C Vicat | 5/95 | $21.89 \times 10^{-3}$ (4.1) |
| 39 | " | 150°C Vicat | 5/95 | $20.82 \times 10^{-3}$ (3.9) |
| 40 (control) | ABS (Abson 89120) | — | 0/100 | $18.69 \times 10^{-3}$ (3.5) |
| 41 | " | 150°C Vicat | 50/50 | $16.02 \times 10^{-3}$ (3.0) |

### All acrylic modifier compositions

| Example No. | SAN-Based mat'l | Imide type | Blend ratio imide/SAN based mat'l | (Comparative) |
|---|---|---|---|---|
| 42 | No SAN: 35 MMA//65 BA | 150° Vicat | 40 modifier/ 60 imide | $14.95 \times 10^{-3}$ (2.8) |
| 43 | 35 (1:1 SAN)//65 BA | " | 40/60 | $13.88 \times 10^{-3}$ (2.6) |
| 44 | No SAN: 35 MMA/65 BA | 170 Vicat (high MW)* | 40/60 | $9.61 \times 10^{-3}$ (1.8) |
| 45 | 35 (1:1) SAN)//65 BA | " | 40/60 | $7.47 \times 10^{-3}$ (1.4) |
| 46 | No SAN 35 MMA//65 BA | 170 Vicat (low MW)** | 40/60 | $8.54 \times 10^{-3}$ (1.6) |
| 47 | 35 (1:1 SAN)//65 BA 65 BA | " | 40/60 | $9.08 \times 10^{-3}$ (1.7) |

\* approximately 120,000 Mw
\*\* approximately 170,000 Mw.

Note: Samples 45—47 and 48—50 show the effects of MW on modifier-to-matrix adhesion. It is known in the art that the lower the MW of the blended polymers, the wider the allowable composition range to achieve solubility. While high MW imide is not compatible with 3:1 SAN (see Example 18), a lower MW imide is quite effectively impact-modified by the 3:1 SAN outershell modifier. We interpret this as evidence of increased solubility (or partial solubility) as a function of MW.

"Abson", "Tyril" and "Killion" are trade marks which may be registered in some or all of the designated states.

## Claims

1. Blend of (A) 1 to 99 parts by weight of polyglutarimide and (B) 99 to 1 parts by weight of single stage polymer comprising substantially units of (i) styrene and/or substituted styrene(s) and (ii) acrylonitrile and/or methacrylonitrile, wherein components (A) and (B) are mutually soluble or partly soluble, components (A) and (B) being partly soluble when two Tg's are present and the initial Tg of either or both of the components (A) and (B) is moved significantly towards the other component's Tg.

2. Blend as claimed in claim 1 wherein said single stage polymer consists of units of (i) and (ii).

3. Blend as claimed in either preceding claim wherein said substituted styrene(s) comprise lower alkyl- and/or halo-substituted styrene(s).

4. Blend as claimed in any preceding claim wherein (i) consists of styrene.

5. Blend as claimed in any preceding claim wherein (ii) consists of acrylonitrile.

6. Blend as claimed in claim 5 wherein said single stage polymer is styrene-acrylonitrile copolymer comprising acrylonitrile units in a minimum ratio (with styrene) of 1:10 by weight (AN:S).

7. Blend as claimed in claim 6 wherein said styrene-acrylonitrile copolymer contains styrene and acrylonitrile in weight ratios of 10:1 to 1:1 (S:AN).

8. Blend as claimed in any preceding claim wherein said polyglutarimide comprises N-methyl glutarimide units.

9. Blend as claimed in any preceding claim wherein said polyglutarimide is derived from urea or ammonia or methylamine imidization of polymer comprising units of methyl methacrylate and optionally styrene.

10. Blend as claimed in claim 9 wherein said polyglutarimide is derived from urea or ammonia imidization of methyl methacrylate-styrene copolymer.

11. Blend as claimed in any preceding claim (a) which has a single Tg as measured by differential scanning calorimetry and/or (b) which is transparent and/or (c) which is optically clear over a temperature range.

12. Blend as claimed in any one of claims 1 to 10 which has two individual glass transition temperatures as measured by differential scanning calorimetry, which are displaced from the Tg values displayed by the unblended components (A) and (B) and which lie between them.

13. Blend as claimed in any preceding claim further including one or more of the following: impact modifier(s), rubber(s), additional polymer(s), filler(s), reinforcement(s), stabilizer(s), colourant(s), pigment(s) and/or lubricant(s).

14. Composition comprising a blend as claimed in any preceding claim.

## Patentansprüche

1. Mischung aus (A) 1 bis 99 Gewichtsteilen Polyglutarimid und (B) 99 bis 1 Gewichtsteilen eines Einstufenpolymeren aus im wesentlichen Einheiten von (I) Styrol und/oder substituiertem Styrol oder substituierten Styrolen und (II) Acrylnitril und/oder Methacrylnitril, wobei die Komponenten (A) und (B) gegenseitig löslich oder teilweise löslich sind, die Komponenten (A) und (B) teilweise löslich sind, wenn zwei Tg-Werte vorliegen, und der Anfangs-Tg-Wert von einer oder beiden der Komponenten (A) und (B) sich merklich auf den Tg-Wert der anderen Komponente bewegt.

2. Mischung nach Anspruch 1, dadurch gekennzeichnet, daß das Einstufenpolymere aus Einheiten von (I) und (II) besteht.

3. Mischung nach einem der vorhergehenden Ansprüche, dadurch gekennzeichnet, daß das substituierte Styrol oder die substituierten Styrole aus einem oder mehreren niederen Alkyl- und/oder Halogen-substituierten Styrolen besteht bzw. bestehen.

4. Mischung nach einem der vorhergehenden Ansprüche, dadurch gekennzeichnet, daß (I) aus Styrol besteht.

5. Mischung nach einem der vorhergehenden Ansprüche, dadurch gekennzeichnet, daß (II) aus Acrylnitril besteht.

6. Mischung nach Anspruch 5, dadurch gekennzeichnet, daß das Einstufenpolymere ein Styrol/Acrylnitril-Copolymeres aus Acrylnitrileinheiten in einem minimalen Verhältnis (mit Styrol) von 1:10, bezogen auf das Gewicht (AN:S), ist.

7. Mischung nach Anspruch 6, dadurch gekennzeichnet, daß das Styrol/Acrylnitril-Copolymere Styrol und Acrylnitril in Gewichtsverhältnissen von 10:1 bis 1:1 (S:AN) enthält.

8. Mischung nach einem der vorhergehenden Ansprüche, dadurch gekennzeichnet, daß das Polyglutarimid aus N-Methylglutarimid in Einheiten besteht.

9. Mischung nach einem der vorhergehenden Ansprüche, dadurch gekennzeichnet, daß das Polyglutarimid auf eine Harnstoff- oder Ammoniak- oder Methylaminimidazation eines Polymeren aus Einheiten von Methylmethacrylat und gegebenenfalls Styrol zurückgeht.

10. Mischung nach Anspruch 9, dadurch gekennzeichnet, daß das Polyglutarimid auf die Harnstoff- oder Ammoniakimidization von Methylmethacrylat/Styrol-Copolymerem zurückgeht.

11. Mischung nach einem der vorhergehenden Ansprüche, die (a) einen einzigen Tg-Wert besitzt, gemessen durch Differentialscanningkalometrie, und/oder die (b) transparent ist und/oder (c) die gegebenenfalls klar über einen Temperaturbereich hinweg ist.

12. Mischung nach einem der Ansprüche 1 bis 10 mit zwei einzelnen Glasübergangstemperaturen, gemessen durch Differentialscanningkalorimetrie, die von den Tg-Werten verschieden sind, welche die nicht-vermischten Komponenten (A) und (B) zeigen, und die dazwischen liegen.

13. Mischungen nach einem der vorhergehenden Ansprüche, dadurch gekennzeichnet, daß sie einen oder mehrere der folgenden Bestandteile enthält: ein oder mehrere Schlagfestigkeitmodifizierungsmittel, einen oder mehrere Kautschuke, eines oder mehrere weitere Polymere, ein oder mehrere Füllstoffe, ein oder mehrere Verstärkungsmittel, ein oder mehrere Stabilisierungsmittel, ein oder mehrere Färbungsmittel, eines oder mehrere Pigmente und/oder ein oder mehrere Gleitmittel.

14. Masse aus einer Mischung nach einem der vorhergehenden Ansprüche.

**Revendications**

1. Mélange de (A) 1 à 99 parties en poids polyglutarimide et (B) 99 à 1 parties en poids d'un polymère à un seul stade comprenant essentiellement des motifs (i) de styrène et/ou de styrène(s) substitué(s) et (ii) d'acrylonitrile et/ou de méthacrylonitrile, dans lequel les composants (A) et (B) sont mutuellement solubles ou partiellement solubles, les composants (A) et (B) étant partiellement solubles lorsque deux Tg sont présentes et la Tg initiale de l'un des composants (A) et (B) ou des deux est déplacée notablement vers la Tg de l'autre composant.

2. Mélange comme revendiqué dans la revendication 1 dans lequel ledit polymère à un seul stade est constitué de motifs de (i) et (ii).

3. Mélange comme revendiqué dans l'une ou l'autre des revendications précédentes dans lequel le(s) styrène(s) substitué(s) comprend (comprennent) un ou plusieurs styrènes alkyl inférieur- et/ou halogéno-substitués.

4. Mélange comme revendiqué dans l'une quelconque des revendications précédentes dans lequel (i) est constitué de styrène.

5. Mélange comme revendiqué dans l'une quelconque des revendications précédentes dans lequel (ii) est constitué d'acrylonitrile.

6. Mélange comme revendiqué dans la revendication 5 dans lequel ledit polymère à un seul stade est un copolymère de styrène-acrylonitrile comprenant des motifs d'acrylonitrile dans un rapport minimal (avec le styrène) de 1/10 en poids (AN/S).

7. Mélange comme revendiqué dans la revendication 6 dans lequel ledit copolymère de styrène-acrylonitrile contient du styrène et de l'acrylonitrile dans des rapports pondéraux de 10/1 à 1/1 (S/AN).

8. Mélange comme revendiqué dans l'une quelconque des revendications précédentes dans lequel ledit polyglutarimide comprend des motifs de N-méthylglutarimide.

9. Mélange comme revendiqué dans l'une quelconque des revendications précédentes dans lequel ledit polyglutarimide dérive de l'imidation par l'urée ou l'ammoniac ou la méthylamine d'un polymère comprenant des motifs de méthacrylate de méthyle et éventuellement de styrène.

10. Mélange comme revendiqué dans la revendication 9 dans lequel ledit polyglutarimide dérive de l'imidation par l'urée ou l'ammoniac d'un copolymère de méthacrylate de méthyle-styrène.

11. Mélange comme revendiqué dans l'une quelconque des revendications précédentes (a) qui a une Tg unique comme mesuré par calorimétrie différentielle par balayage et/ou (b) qui est transparent et/ou (c) qui est optiquement limpide dans une gamme des températures.

12. Mélange comme revendiqué dans l'une quelconque des revendications 1 à 10 qui a deux températures de transition vitreuse individuelles, comme mesuré par calorimétrie différentielle par balayage, qui sont déplacées par rapport aux Tg présentées par les composants (A) et (b) non mélangés et qui se situent entre elles.

13. Mélange comme revendiqué dans l'une quelconque des revendications précédentes comprenant de plus un ou plusieurs: modificateur(s) de choc, caoutchouc(s), polymère(s) additionnel(s), charge(s), agent(s) de renfort, stabilisant(s), colorant(s), pigment(s) et/ou lubrifiant(s).

14. Composition comprenant un mélange comme revendiqué dans l'une quelconque des revendications précédentes.